# EUROPÄISCHE PATENTSCHRIFT

(11) **EP 1 193 010 B1**
(45) Veröffentlichungstag und Bekanntmachung des Hinweises auf die Patenterteilung: **04.12.2002**
(21) Anmeldenummer: 01122436.7
(22) Anmeldetag: 20.09.2001
(51) Int. Cl.: B23B 27/16, B23C 5/20

(54) **Wendeschneidplatte zum Drehen**
Indexable cutting insert for turning
Plaquette de coupe indexable pour tourner

(30) Priorität: 25.09.2000 AT 7042000
(43) Veröffentlichungstag der Anmeldung: 03.04.2002
(73) Patentinhaber: Plansee Tizit Aktiengesellschaft, 6600 Reutte /Tirol (AT)
(72) Erfinder: Maier, Hans, 6600 Pflach (AT)
(74) Vertreter: Lohnert, Wolfgang, Dr.

(56) Entgegenhaltungen:
- FR-A- 1 260 357
- US-A- 2 289 344

## Beschreibung

Die Erfindung betrifft eine Wendeschneidplatte zum Drehen mit mehreren Hauptschneidkanten wobei benachbarte miteinander einen Eckwinkel einschließende Hauptschneidkanten über eine Schneidecke verbunden sind die zwei gleiche symmetrisch zur Winkelhalbierenden angeordnete Eckenabschnitte aufweist.

Bei herkömmlichen Wendeschneidplatten sind in der Regel benachbarte, miteinander einen Winkel einschließende Hauptschneidkanten, durch eine Schneidecke mit einem einzigen Eckenabschnitt in Form einer Eckenrundung oder einer Schlichtschneide miteinander verbunden.
Als Eckenrundungen werden bei Wendeschneidplatten solche Eckausführungen bezeichnet, bei denen die Schneidecken als Kreisbögen mit Radien ausgeführt sind, die bei den gebräuchlichsten Wendeschneidplatten in Abhängigkeit von der Wendeschneidplattengröße, in einem Bereich zwischen 0,4 und 2,4 mm liegen.
Bei Wendeschneidplatten mit Schlichtschneiden, mit denen eine verbesserte Oberflächenqualität erreicht wird, sind die Schneidecken als Kreisbögen ausgeführt, deren Radien in Annäherung an eine Gerade um ein Vielfaches größer sind als bei den Eckenrundungen.

Darüber hinaus sind für spezielle Anwendungen Wendeschneidplatten bekannt, bei denen jede Schneidecke aus zwei gleichen Eckenabschnitten besteht.
Eine derartige Wendeschneidplatte ist beispielsweise, in der FR 1 260 357 beschrieben. Bei der Wendeschneidplatte gemäß dieser Patentschrift sind die benachbarten Hauptschneidkanten, durch zwei gleich lange miteinander einen stumpfen Winkel einschließende, annähernd gerade Eckenabschnitte, die symmetrisch zur Winkelhalbierenden angeordnet, sind miteinander verbunden.
Durch eine derartige Ausgestaltung werden einerseits die Schneidecken der Wendeschneidplatte verstärkt. Andererseits soll eine Glättung der Oberfläche, welche zuvor durch die Hauptschneidkante und den voreilenden Eckenabschnitt bearbeitet wurde, durch den nacheilenden zweiten Eckenabschnitt erreicht werden.

Bei dieser Wendeschneidplatte besteht zwar jede Schneidecke aus zwei gleichen Eckenabschnitten, bei einem Zerspanungsvorgang kommen aber immer beide benachbarten Eckenabschnitte gleichzeitig zum Einsatz und werden damit in ein und demselben Arbeitsvorgang auf Verschleiß beansprucht.

Die Aufgabe der vorliegenden Erfindung ist es daher eine Wendeschneidplatte mit zwei gleichen symmetrisch zur Winkelhalbierenden angeordneten Eckenabschnitten zu schaffen, die unabhängig voneinander einsetzbar sind, wodurch eine bessere Wirtschaftlichkeit der Wendeschneidplatte erreicht wird.

Erfindungsgemäß wird dies dadurch erreicht, dass die zwei Eckenabschnitte in ihrem an die Winkelhalbierende unmittelbar angrenzenden Bereich in Bezug auf die benachbarten Außenkonturen eine Einsenkung aufweisen.

Diese spezielle Ausgestaltung lässt sich bei allen wichtigen Formen von Wendeschneidplatten wie quadratischen, dreieckigen, rechteckigen und rhombischen Formen verwirklichen.
Mit der erfindungsgemäßen Ausgestaltung der Wendeschneidplatte sind jeweils benachbarte Eckenabschnitte konstruktiv voneinander getrennt. Damit wird durch geeignete Wahl des Anstellwinkels der Wendeschneidplatte erreicht, dass während eines Zerspanungsvorganges mit gleichbleibender Zerspanungsrichtung neben der gerade im Einsatz stehenden Hauptschneidkante jeweils nur der angrenzende Eckenabschnitt an der Zerspanung beteiligt ist, während der zweite Eckenabschnitt vollkommen freigestellt ist und keinem Verschleiß unterliegt. Erst bei einem Wechsel der Zerspanungsrichtung, z.B. von Längsdrehen nach links auf Längsdrehen nach rechts, oder von Längsdrehen auf Plandrehen, kommt der zweite unverschlissene Eckenabschnitt mit seiner benachbarten Hauptschneidkante zum Einsatz, während der vorher eingesetzte Eckenabschnitt mit dessen benachbarter Hauptschneidkante freigestellt ist. In Abhängigkeit von der Geometrie der Wendeschneidplatte und der Art des Wechsels der Zerspanungsrichtung kann dazu eine Änderung des Anstellwinkels der Wendeschneidplatte notwendig sein.

Auf diese Art und Weise wird bei jeder Wendeschneidplatte eine Verdoppelung der unabhängig voneinander verwendbaren Eckenabschnitte und damit eine Erhöhung der Wirtschaftlichkeit erreicht.

So können beispielsweise bei negativen quadratischen Wendeschneidplatten bis zu 16 unabhängig voneinander einsetzbare Schneidenbereiche vorgesehen werden, womit eine optimale Nutzung der Wendeschneidplatten erreicht wird. Als Schneidenbereich ist dabei jeweils ein Eckenabschnitt mit dazugehöriger Hauptschneidkante zu verstehen.

Da bei der Zerspanung der im Einsatz befindliche Schneidenbereich nicht bis unmittelbar an die Winkelhalbierende zwischen den beiden Eckenabschnitten heranreicht, ist es möglich die zentrale Auflagefläche der Wendeschneidplatten im Bereich jeder Winkelhalbierenden bis unmittelbar an die Außenkanten der Wendeschneidplatte heranzuführen. Dadurch ergibt sich eine optimale Auflage der Wendeschneidplatte, ohne Aufkippen des Schneideinsatzes selbst bei höchster Belastung.

Verständlicherweise kommen die Vorteile der erfindungsgemäßen Wendeschneidplatte nur dann vollständig zum Tragen, wenn die Wendeschneidplatte bei Zerspanungsoperationen mit unterschiedlichen Zerspanungsrichtungen zum Einsatz kommt, was aber bei vielen Bearbeitungen der Fall ist.

Im Folgenden wird die Erfindung an Hand von Figuren näher erläutert.
Es zeigen:
- Figur 1: eine erfindungsgemäße Wendeschneidplatte in Schrägansicht
- Figur 2: die erfindungsgemäße Wendeschneidplatte nach Figur 1 in vergrößertem Maßstab in Ansicht von oben
- Figur 3: die vergrößerte Eckausführung der Variante einer erfindungsgemäßen Wendeschneidplatte in Ansicht von oben
- Figur 4a-4b: die erfindungsgemäße Wendeschneidplatte nach Figur 1 und 2 in unterschiedlichen Arbeitspositionen

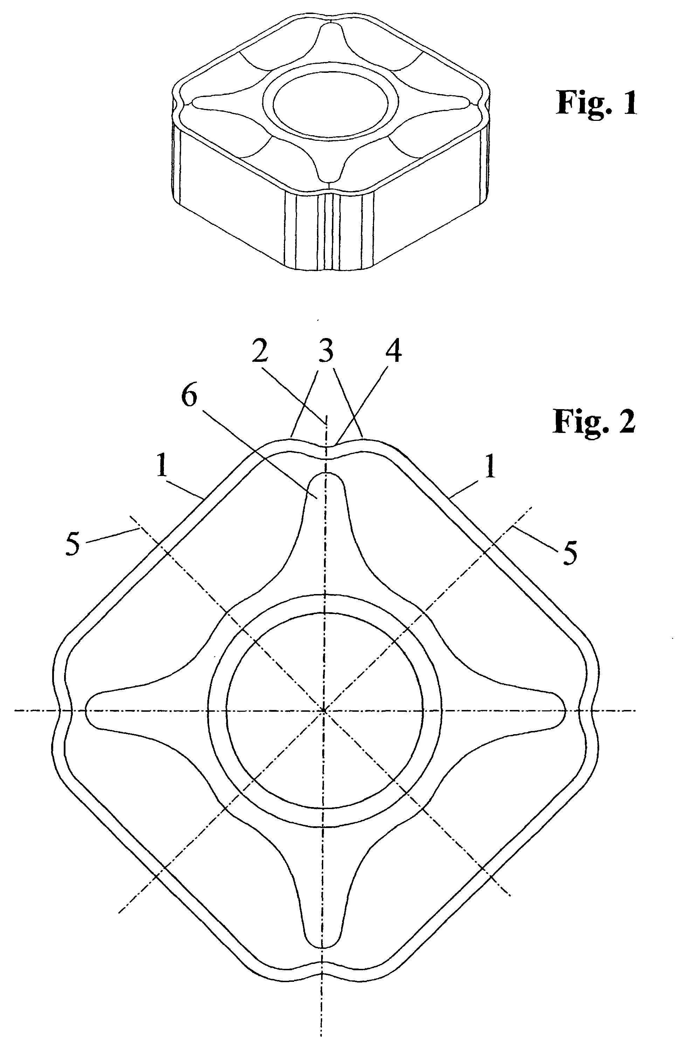

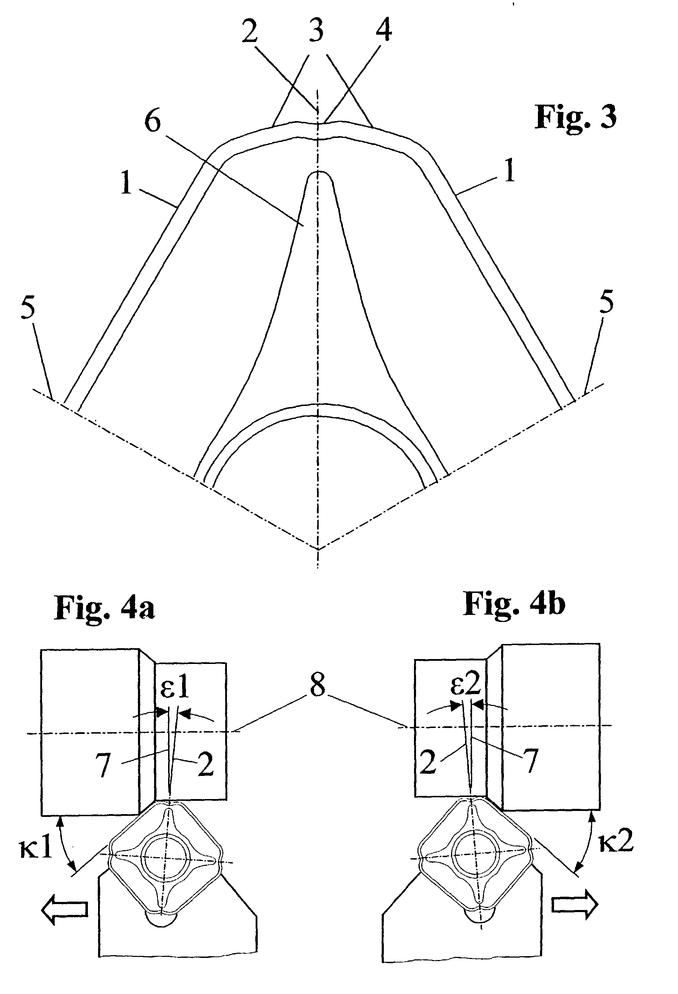

Die Figuren 1 und 2 zeigen eine erfindungsgemäße Wendeschneidplatte in quadratischer Form bei der zwei benachbarte Hauptschneidkanten -1- einen Winkel von 90° miteinander einschließen. Symmetrisch zur jeweils zugehörigen Winkelhalbierenden -2-, sind zwei als Eckenrundungen ausgeführte Eckenabschnitte -3- angeordnet, die miteinander in Verbindung stehen und übergangslos in die benachbarten Hauptschneidkanten -1- übergehen. Im Bereich der Winkelhalbierenden weisen die Eckenabschnitte -3- eine Einsenkung -4- in Bezug auf die Außenkonturen auf. Die Wendeschneidpatte ist als Negativplatte mit 16 unabhängig voneinander einsetzbaren Schneidenbereichen ausgeführt, wobei als Schneidenbereich jeweils der als Eckenrundung ausgeführte Eckenabschnitt -3- bis zum Beginn der Einsenkung -4- einschließlich der zugehörigen Hauptschneidkante -1- bis zur Symmetrielinie -5- der Wendeschneidplatte zu verstehen ist. Dadurch dass bei der Zerspannung der Schneidenbereich nur bis zum Beginn der Einsenkung -4- und nicht bis hin zur Winkelhalbierenden -2- im Einsatz ist, kann die Auflagefläche -6- der Wendeschneidplatte im Bereich der Winkelhalbierenden -2- bis unmittelbar an die Außenkontur der Wendeschneidplatte herangeführt werden wodurch eine stabile Auflage der Wendeschneidplatte ermöglicht wird. In Figur 3 ist die vergrößerte Ansicht der Schneidecke einer im Wesentlichen dreieckförmigen erfindungsgemäßen Wendeschneidplatte dargestellt, bei der die Eckenabschnitte -3- nicht als Eckenrundungen sondern als Schlichtschneiden, mit in Annäherung an eine Gerade vergleichsweise wesentlich größeren Radien, ausgeführt sind.
Um bei der Zerspanung jeweils nur einen Schneidenbereich gezielt zum Einsatz zu bringen, muss der bei der Zerspanung vorgesehene Anstellwinkel gezielt auf die Geometrie der verwendeten Wendeschneidplatte und die Zerspanungsrichtung abgestimmt werden, um den jeweils benachbarten Schneidenbereich freizustellen.
Die Figuren 4a - 4b zeigen die erfindungsgemäße Wendeschneidplatte nach Figur 1 beim Längsdrehen nach links und rechts. Beim Längsdrehen nach links wird der Anstellwinkel κ₁ zwischen der linken Hauptschneidkante und der Werkstückoberfläche beispielsweise so eingestellt, dass die Winkelhalbierende -2- gegen die Ebene -7- senkrecht zur Werkstückachse -8- nach rechts geneigt ist und mit dieser einen Winkel ε₁ von etwa 5° einschließt. Beim Längsdrehen nach rechts wird der Anstellwinkel κ₂ zwischen der rechten Hauptschneidkante und der Werkstückoberfläche so eingestellt, dass die Winkelhalbierende -2- gegen die Ebene -7- nach links geneigt ist und mit dieser einen Winkel ε₂ von etwa 5° einschließt.

## Patentansprüche

1. Wendeschneidplatte zum Drehen mit mehreren Hauptschneidkanten (1) wobei benachbarte miteinander einen Eckwinkel einschließende Hauptschneidkanten (1) über eine Schneidecke verbunden sind, die zwei gleiche symmetrisch zur Winkelhalbierenden (2) angeordnete Eckenabschnitte (3) aufweist,
**dadurch gekennzeichnet,**
**dass** die zwei Eckenabschnitte (3)in ihrem an die Winkelhalbierende (2) unmittelbar angrenzenden Bereich in Bezug auf die benachbarten Außenkonturen eine Einsenkung (4) aufweisen.

2. Wendeschneidplatte zum Drehen nach Anspruch 1, **dadurch gekennzeichnet, dass** die Eckenabschnitte (3) als Eckenrundungen ausgeführt sind.

3. Wendeschneidplatte zum Drehen nach Anspruch 1, **dadurch gekennzeichnet, dass** die Eckenabschnitte (3) als Schlichtschneiden ausgeführt sind.

## Claims

1. Indexable cutting insert for turning, having a plurality of main cutting edges (1), adjacent main cutting edges (1), which enclose a corner angle with one another, being connected via a cutting corner which has two identical corner sections (3) arranged symmetrically to the angle bisector (2), **characterised in that** the two corner sections (3), in their region directly adjoining the angle bisector (2), have a depression (4) with respect to the adjacent outer contours.

2. Indexable cutting insert for turning according to Claim 1, **characterised in that** the corner sections (3) are configured as rounded corner portions.

3. Indexable cutting insert for turning according to Claim 1, **characterised in that** the corner sections (3) are configured as finish cutting edges.

## Revendications

1. Plaquette de coupe indexable pour le travail sur un tour, qui comporte plusieurs arêtes principales de coupe (1) et dans laquelle des arêtes principales de coupe (1) qui sont voisines entre elles et qui encadrent un angle de coin sont reliées par l'intermédiaire d'un angle de coupe qui comprend deux sections de coin (3) qui sont disposées de manière symétrique par rapport à la bissectrice de l'angle (2),
**caractérisée en ce que**
les deux sections de coin (3) comportent, dans leur zone qui délimite directement la bissectrice de l'angle (2), un renfoncement (4) par rapport aux contours extérieurs voisins.

2. Plaquette de coupe indexable pour le travail sur un tour selon la revendication 1, **caractérisée en ce que** les sections de coin (3) sont réalisées sous la forme d'arrondissages d'un coin.

3. Plaquette de coupe indexable pour le travail sur un tour selon la revendication 1, **caractérisée en ce que** les sections de coin (3) sont réalisées sous la forme de dispositifs de coupe de finition.
